# EUROPÄISCHE PATENTSCHRIFT

(11) **EP 2 796 255 B1**
(45) Veröffentlichungstag und Bekanntmachung des Hinweises auf die Patenterteilung: **25.05.2016**
(21) Anmeldenummer: 14156106.8
(22) Anmeldetag: 21.02.2014
(51) Int. Cl.: B26D 7/32

(54) **Vorrichtung zum Fördern von Lebensmittelprodukten**
Device for conveying food products
Dispositif d'acheminement de produits alimentaires

(30) Priorität: 25.04.2013 DE 102013207504
(43) Veröffentlichungstag der Anmeldung: 29.10.2014
(73) Patentinhaber: Weber Maschinenbau GmbH Breidenbach, 35236 Breidenbach (DE)
(72) Erfinder: Briel, Kai-André, 35216 Bidenkopf (DE); Rother, Ingo, 35236 Breidenbach (DE)
(74) Vertreter: Manitz, Finsterwald & Partner GbR

(56) Entgegenhaltungen:
- DE-A1-102008 019 985
- GB-A- 912 499

## Beschreibung

Die vorliegende Erfindung betrifft eine Vorrichtung zum Fördern von Lebensmittelprodukten, insbesondere eine Portionierfördereinheit, mit wenigstens einer Fördereinrichtung, welche dazu ausgebildet ist, auf einer Produktauflagefläche befindliche Lebensmittelprodukte entlang einer Produktförderrichtung zu fördern, wobei die Fördereinrichtung gegenüber einer stationären Basis der Vorrichtung verstellbar ist.

Verstellbare Fördereinrichtungen werden bei der industriellen Verarbeitung von Lebensmittelprodukten zu verschiedenen Zwecken benötigt. Beispielsweise dienen Portionierfördereinheiten dazu, von einem Hochleistungs-Slicer aufgeschnittene Wurst- oder Käsescheiben zu Portionen zusammenzustellen. Die Einzelscheiben können auf der Produktauflagefläche der Portionierfördereinheit gestapelt oder geschindelt und nach Fertigstellung der Portion abtransportiert werden. Hierbei kann es wünschenswert sein, die Produktauflagefläche im Verlauf des Stapelns in der Höhe zu verstellen, um so für jede Produktscheibe ein optimales Auftreffen zu gewährleisten. Falls geschindelte Portionen gewünscht sind, muss die Produktauflagefläche darüber hinaus quer- und/oder längsverstellbar sein. Ein Verstellen in Längsrichtung, also in Produktförderrichtung, kann z.B. durch die ohnehin mögliche Bewegung des Fördermittels, beispielsweise eines Endlosförderbandes, erfolgen, ohne dass ein Verstellen der Fördereinheit oder einer Komponente davon als Ganzes erforderlich ist. Für eine Höhen- sowie eine Querverstellung sind dagegen andere Maßnahmen erforderlich.

Fördereinrichtungen mit verstellbarer Produktauflagefläche können jedoch auch an anderen Stellen innerhalb einer Produktionslinie für Lebensmittelprodukte angeordnet sein.

Das Verstellen der Fördereinrichtung gegenüber der stationären Basis kann beispielsweise mittels eines Spindeltriebs erfolgen. Spindeltriebe sind jedoch relativ wartungsintensiv. Bei der Verarbeitung von Lebensmittelprodukten besteht zusätzlich das Problem, dass die Spindeln häufig nur mit relativ hohem Aufwand zu reinigen sind.

In der DE 10 2008 019 985 A1 ist eine Fördereinrichtung in Form eines heb- und senkbaren Ablagebandes offenbart. Zur Höhenverstellung des Ablagebandes ist eine Parallelogrammführung mit drei Führungshebeln vorgesehen.

Es ist eine Aufgabe der Erfindung, mit einfachen Mitteln eine verstellbare Fördereinrichtung für Lebensmittelprodukte bereitzustellen, welche die Einhaltung hoher funktioneller und hygienischer Anforderungen bei möglichst einfacher Reinigbarkeit ermöglicht.

Die Lösung der Aufgabe erfolgt durch eine Vorrichtung zum Fördern von Lebensmittelprodukten mit den Merkmalen des Anspruchs 1.

Bei einer erfindungsgemäßen Vorrichtung ist zur Verstellung der Fördereinrichtung eine Verstelleinrichtung vorgesehen, die wenigstens eine erste Gelenkarmanordnung und eine davon beabstandete zweite Gelenkarmanordnung umfasst.

Erfindungsgemäß umfassen die erste Gelenkarmanordnung und die zweite Gelenkarmanordnung jeweils wenigstens einen an der Basis angelenkten ersten Gelenkarm und einen an der Fördereinrichtung angelenkten zweiten Gelenkarm, wobei einander entsprechende Gelenkarme der ersten und der zweiten Gelenkarmanordnung in gegenläufiger Weise und/oder in gleichsinniger Weise um jeweilige parallele Schwenkachsen verschwenkbar sind.

Weiterhin sieht die Erfindung vor, dass eine dritte Gelenkarmanordnung vorgesehen ist, welche wenigstens einen an der Basis angelenkten ersten Gelenkarm und einen an der Fördereinrichtung angelenkten zweiten Gelenkarm umfasst, wobei insbesondere der erste und der zweite Gelenkarm der dritten Gelenkarmanordnung gleichläufig und synchron zu entsprechenden Gelenkarmen der ersten Gelenkarmanordnung verschwenkbar sind. Durch eine solche dritte Gelenkarmanordnung kann ein unerwünschtes Verkippen der Fördereinrichtung auf besonders vorteilhafte Weise vermieden werden. Insbesondere kann durch eine Zwangskopplung von zwei der drei Gelenkarmanordnungen im Sinne gleichläufiger und synchroner Bewegungen einander entsprechender Gelenkarme eine stabile Führung für die verstellbare Fördereinrichtung bereitgestellt werden.

Erfindungsgemäß ist ferner vorgesehen, dass der erste und/oder der zweite Gelenkarm der ersten Gelenkarmanordnung, der erste Gelenkarm der dritten Gelenkarmanordnung und der zweite Gelenkarm der dritten Gelenkarmanordnung an einem gemeinsamen starren Koppelelement angelenkt sind. Auf diese Weise kann eine Zwangskopplung der beiden Gelenkarmanordnungen dergestalt erzielt werden, dass die Fördereinrichtung an den beiden oberen Anlenkpunkten gleichermaßen abgestützt ist, sodass also ein unerwünschtes Verkippen der Produktauflagefläche ausgeschlossen ist. Bei dem starren Koppelelement kann es sich um einen einfach herzustellenden Hebel handeln, beispielsweise in Form eines Platten- oder Profilelements.

Die Erfindung beruht u.a. auf der Erkenntnis, dass Gelenkarmanordnungen wesentlich einfacher gereinigt werden können als beispielsweise Spindeltriebe. Durch das Angreifen der Gelenkarmanordnungen an zwei beabstandeten Anlenkpunkten ist eine sichere Lagerung der Fördereinrichtung gewährleistet. Ein Verschwenken einander entsprechender Gelenkarme ermöglicht je nach Ausgestaltung eine Höhenverstellung und/oder eine Seitenverstellung der Produktauflagefläche. Bei Bedarf können auch eine Höhenverstellung, eine Querverstellung bzw. eine Längsverstellung in geeigneter Weise miteinander kombiniert werden. Ein Vorteil der Erfindung ist darin zu sehen, dass eine Verstelleinrichtung, welche auf verschwenkbaren Gelenkarmen beruht, besonders einfach und kostengünstig herstellbar ist.

Weiterbildungen der Erfindung sind in den abhängigen Ansprüchen, der Beschreibung sowie der beigefügten Zeichnung angegeben.

Eine Ausführungsform der Erfindung sieht vor, dass die erste und die zweite Gelenkarmanordnung quer zu der Produktförderrichtung voneinander beabstandet sind und vorzugsweise an seitlichen Endbereichen der Fördereinrichtung angeordnet sind. Dies ermöglicht eine besonders stabile Lagerung der Tragstruktur der Fördereinrichtung, insbesondere in dem Fall, in dem die Ausdehnung der Produktauflagefläche quer zu der Förderrichtung beträchtlich größer ist als die Ausdehnung der Produktauflagefläche in Produktförderrichtung.

Die Schwenkachsen verlaufen vorzugsweise parallel zu der Produktförderrichtung. D.h. die Gelenkarme scheren beim Verschwenken quer zu der Produktförderrichtung aus, was hinsichtlich des verfügbaren Bauraums besonders günstig ist.

Die Verstelleinrichtung kann derart gestaltet sein, dass bei einer Verstellung der Fördereinrichtung die Neigung der Produktauflagefläche beibehalten wird. Beispielsweise kann es wünschenswert sein, dass während der Portionserstellung die Produktauflagefläche stets horizontal bleibt, um die Stapelbildung nicht zu beeinträchtigen. Dies kann durch eine geeignete Abstimmung der Schwenkbewegung der Gelenkarme und/oder durch zusätzliche Maßnahmen wie insbesondere an geeigneter Stelle wirksamer Führungseinrichtungen erzielt werden.

Bevorzugt ist die dritte Gelenkarmanordnung zwischen der ersten Gelenkarmanordnung und der zweiten Gelenkarmanordnung angeordnet. Dies ermöglicht eine besonders kompakte Bauweise.

Eine spezielle Ausgestaltung der Erfindung sieht vor, dass die an dem Koppelelement angelenkten ersten Gelenkarme der ersten und der dritten Gelenkarmanordnung und/oder die an dem Koppelelement angelenkten zweiten Gelenkarme der ersten und der dritten Gelenkarmanordnung jeweils gleich lang und zueinander parallel sind. Mit anderen Worten werden bevorzugt durch die Anlenkpunkte der ersten und der dritten Gelenkarmanordnung zwei benachbarte Parallelogramme gebildet. Diese benachbarten Parallelogramme haben vorzugsweise eine Seite gemeinsam.

Prinzipiell könnten auch der erste und der zweite Gelenkarm der dritten Gelenkarmanordnung an voneinander beabstandeten Anlenkpunkten an dem Koppelelement angelenkt sein. Bei einer solchen Ausgestaltung würden der erste und der zweite Gelenkarm der dritten Gelenkarmanordnung nicht in direkter Verbindung stehen. Vielmehr würde sich z.B. zwischen dem oberen Anlenkpunkt des unteren Gelenkarms und dem unteren Anlenkpunkt des oberen Gelenkarms ein Abschnitt des starren Koppelelements als ein Zwischenarm befinden, sodass die beiden durch die Anlenkpunkte definierten Parallelogramme um einen bestimmten Winkel zueinander versetzt wären.

Gemäß einer weiteren Ausführungsform der Erfindung ist jeder Gelenkarm der ersten Gelenkarmanordnung und/oder der zweiten Gelenkarmanordnung durch ein Paar von gleich langen Parallelhebeln gebildet, die jeweils längs der Schwenkachse versetzt angeordnet sind. Hierdurch kann die Stabilität der Gesamtanordnung weiter gesteigert werden. An den Gelenkstellen können die jeweiligen Parallelhebelanordnungen durch Scharnierzapfen oder dergleichen miteinander verbunden sein. Vorzugsweise sind die Parallelhebel in Form von plattenartigen Bauteilen ausgeführt.

Eine weitere Ausführungsform der Erfindung sieht vor, dass eine Antriebseinrichtung zum gemeinsamen Verschwenken einander entsprechender Gelenkarme der ersten Gelenkarmanordnung und der zweiten Gelenkarmanordnung vorgesehen ist. Auf diese Weise ist ein schnelles automatisches Verstellen der Fördereinrichtung möglich. Beispielsweise kann die Antriebseinrichtung einen oder mehrere Elektromotoren umfassen.

Eine spezielle Ausführungsform der Erfindung sieht vor, dass die Antriebseinrichtung einen der ersten Gelenkarmanordnung zugeordneten ersten Antrieb aufweist, wobei eine Koppelanordnung, insbesondere ein Kurbeltrieb, zur Übertragung einer Antriebskraft von dem ersten Antrieb auf die zweite Gelenkarmanordnung vorgesehen ist, insbesondere derart, dass einander entsprechende Gelenkarme der ersten und der zweiten Gelenkarmanordnung zur Höhenverstellung der Fördereinrichtung gegenläufig verschwenkbar sind. Im einfachsten Fall kann der erste Antrieb einen Motor mit einer rotierbaren Antriebswelle aufweisen, welche direkt oder indirekt eine Verschwenkung des ersten Gelenkarms der ersten Gelenkarmanordnung bewirkt. Über einen Kurbeltrieb kann dann zwangsweise ein gleichzeitiges gegenläufiges Verschwenken des ersten Gelenkarms der zweiten Gelenkarmanordnung erfolgen, sodass für die zweite Gelenkarmanordnung kein separater Antrieb erforderlich ist. Je nach Anwendung können der erste Antrieb und die Koppelanordnung an den ersten Gelenkarmen oder an den zweiten Gelenkarmen der ersten und der zweiten Gelenkarmanordnung angreifen. Prinzipiell können die erste und die zweite Gelenkarmanordnung auch jeweils mehr als zwei Gelenkarme umfassen, wobei der Antrieb bzw. die Koppelanordnung an zwischen den ersten und den zweiten Gelenkarmen angeordneten Koppelgliedern angreifen.

Eine weitere Ausführungsform der Erfindung sieht vor, dass die Antriebseinrichtung einen der ersten Gelenkarmanordnung zugeordneten ersten Antrieb und einen der zweiten Gelenkarmanordnung zugeordneten zweiten Antrieb aufweist, wobei der erste Antrieb und der zweite Antrieb unabhängig voneinander betreibbar sind, insbesondere derart, dass die Fördereinrichtung quer zur Produktförderrichtung verstellbar ist. Gemäß einer besonders bevorzugten Ausgestaltung sind die beiden Antriebe direkt an jeweiligen unteren Schwenkachsen der ersten Gelenkarme angeordnet. Durch zwei unabhängig ansteuerbare Antriebe, beispielsweise Elektromotoren, kann je nach Art der Ansteuerung entweder eine Höhenverstellung oder eine Seitenverstellung sowie bei Bedarf eine Kombination aus Höhenverstellung und Seitenverstellung der Fördereinrichtung bewerkstelligt werden.

Die Fördereinrichtung kann insbesondere als Band- oder Riemenförderer ausgebildet sein. Die zweiten Gelenkarme der ersten und der zweiten Gelenkarmanordnung können hierbei direkt an einer Tragstruktur oder an einem Rahmen des Band- oder Riemenförderers angelenkt sein.

Die Erfindung betrifft auch eine Produktionslinie mit wenigstens einer Schneidvorrichtung zum Aufschneiden von Lebensmittelprodukten, insbesondere einem Hochleistungs-Slicer, und wenigstens einer Vorrichtung zum Fördern aufgeschnittener Lebensmittelprodukte, welche wie vorstehend und nachstehend beschrieben gestaltet ist.

Die Erfindung wird nachfolgend beispielhaft unter Bezugnahme auf die Zeichnungen beschrieben.
- Fig. 1: ist eine schematische Darstellung einer erfindungsgemäßen Produktionslinie, welche einen Hochleistungs-Slicer und eine Vorrichtung zum Fördern von Lebensmittelprodukten umfasst.
- Fig. 2: zeigt eine Produktfördervorrichtung gemäß einer ersten Ausführungsform der Erfindung in einer ersten Höhenstellung.
- Fig. 3: zeigt die Produktfördervorrichtung gemäß Fig. 2 in einer zweiten Höhenstellung.
- Fig. 4: zeigt eine Produktfördervorrichtung gemäß einer zweiten Ausführungsform der Erfindung in einer ersten seitlichen Stellung.
- Fig. 5: zeigt die Produktfördervorrichtung gemäß Fig. 4 in einer zweiten seitlichen Stellung.

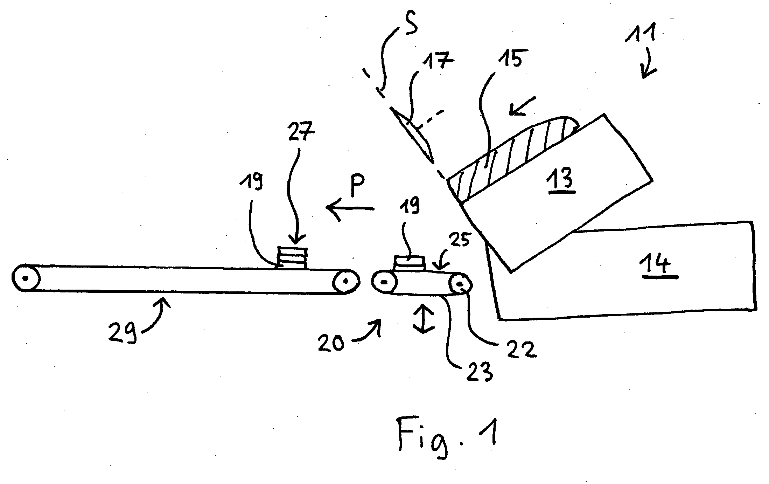

In Fig. 1 ist ein Hochleistungs-Slicer 11 schematisch dargestellt, welcher eine Produktzuführung 13 aufweist. Die Produktzuführung 13 dient dazu, Lebensmittelprodukte 15 wie z.B. Wurstriegel auf mehreren Förderspuren einer Schneidebene S zuzustellen, in welcher sich ein Schneidmesser 17, insbesondere rotierend und/oder planetarisch umlaufend, bewegt. Wie dargestellt ist die Produktzuführung 13 gegenüber einem Grundrahmen 14 des Hochleistungs-Slicers 11 geneigt.

Von dem Schneidmesser 17 abgetrennte Produktscheiben 19 fallen auf eine unmittelbar neben der Schneidebene S angeordnete Portionierfördereinheit 20, welche hier einen Bandförderer 22 mit einem Förderband 23 umfasst. Die Oberseite des Förderbands 23 bildet hierbei eine ebene Produktauflagefläche 25 für die Produktscheiben 19. Die Portionierfördereinheit 20 ist durch eine nicht dargestellte elektronische Steuereinrichtung ansteuerbar, um Produktportionen 27 aus gestapelten Produktscheiben 19 entlang einer Produktförderrichtung P auf einen nachgeordneten Ausgangsförderer 29 zu fördern. Der Ausgangsförderer 29 ist bei dem dargestellten Ausführungsbeispiel ebenfalls als Bandförderer ausgebildet und dient dazu, fertiggestellte Produktportionen 27 einer weitergehenden Verarbeitung, beispielsweise einer Verpackungsmaschine, zuzuführen. Grundsätzlich können anstelle von Bandförderern auch Multiriemenförderer, Rollenförderer oder dergleichen vorgesehen sein.

Um bei der Erstellung von Produktportionen 27 die einzelnen Produktscheiben 19 in einer gewünschten Weise auf der Produktauflagefläche 25 zu positionieren, ist die Portionierfördereinheit 20 quer zu der Produktförderrichtung P verstellbar, d.h. je nach Anwendung höhenverstellbar und/oder querverstellbar. Eine Längsverstellung der Produktauflagefläche 25 in oder entgegen der Produktförderrichtung P kann demgegenüber durch geeignetes Ansteuern eines Antriebs des Förderbands 23 erfolgen.

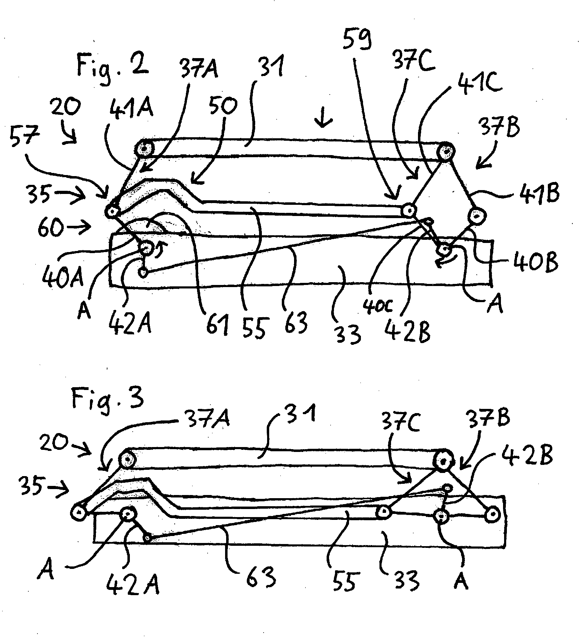

Wie aus Fig. 2 und 3 hervorgeht, erfolgt das Verstellen der Produktauflagefläche 25 durch eine Verstelleinrichtung 35, welche zwischen einer Tragstruktur 31 des Bandförderers 22 und einer stationären Basis 33 der Portionierfördereinheit 20 angeordnet ist. Die Verstelleinrichtung 35 umfasst drei Gelenkarmanordnungen 37A, 37B, 37C, welche quer zu der Produktförderrichtung P voneinander beabstandet sind. Eine erste Gelenkarmanordnung 37A und eine zweite Gelenkarmanordnung 37B sind an jeweiligen seitlichen Endbereichen der Portionierfördereinheit 20 angeordnet und weisen jeweils einen an der Basis 33 angelenkten ersten Gelenkarm 40A, 40B und einen an der Tragstruktur 31 angelenkten zweiten Gelenkarm 41A, 41B auf. Wie dargestellt sind sowohl die ersten Gelenkarme 40A, 40B als auch die zweiten Gelenkarme 41A, 41B der ersten und der zweiten Gelenkarmanordnung 37A, 37B in gegenläufiger Weise um jeweilige parallele Schwenkachsen A verschwenkbar. Die Schwenkachsen A verlaufen hierbei parallel zu der Produktförderrichtung P.

Eine zwischen der ersten Gelenkarmanordnung 37A und der zweiten Gelenkarmanordnung 37B angeordnete dritte Gelenkarmanordnung 37C weist ebenfalls einen ersten Gelenkarm 40C und einen zweiten Gelenkarm 41C auf, welche über ein starres Koppelement 55 mit der ersten Gelenkarmanordnung 37A gekoppelt sind. Das plattenförmige Koppelelement 55 weist eine Kröpfung 50 auf und ist an einem ersten Ende 57 gelenkig mit dem ersten Gelenkarm 40A und dem zweiten Gelenkarm 41A der ersten Gelenkarmanordnung 37A verbunden. An seinem zweiten Ende 59 ist das Koppelelement 55 gelenkig mit dem ersten Gelenkarm 40C und dem zweiten Gelenkarm 41C der dritten Gelenkarmanordnung 37C gekoppelt. Die Kröpfung 50 vermeidet ein Anschlagen des starren Koppelelements 55 an Komponenten der Schwenklagerung und kann in Abhängigkeit von den konkreten baulichen Gegebenheiten auch an anderer Stelle vorgesehen sein oder fehlen.

Bei dem dargestellten Ausführungsbeispiel sind die erste Gelenkarmanordnung 37A und die dritte Gelenkarmanordnung 37C an entgegengesetzten Endbereichen der Tragstruktur 31 angelenkt, wodurch sich eine besonders hohe Stabilität ergibt. Je nachdem, wie es aufgrund der Anwendung günstig erscheint, können der erste Gelenkarm 40C und der zweite Gelenkarm 41C der dritten Gelenkarmanordnung 37C auch an beliebiger anderer Stelle an der Basis 33 bzw. an der Tragstruktur 31 angelenkt sein. Speziell könnten die erste Gelenkarmanordnung 37A und die dritte Gelenkarmanordnung 37C näher aneinandergerückt sein. Das starre Koppelelement 55 könnte dann entsprechend kürzer gestaltet sein.

Eine Antriebseinrichtung 60 der Verstelleinrichtung 35 umfasst einen der ersten Gelenkarmanordnung 37A zugeordneten Antriebsmotor 61, welcher vorzugsweise als Elektromotor ausgeführt ist und eine nicht dargestellte Motorwelle aufweist, welche direkt oder indirekt die Schwenkachse A des ersten Gelenkarms 40A der ersten Gelenkarmanordnung 37A antreibt. Ein Kurbeltrieb 63 überträgt die Antriebskraft des Antriebsmotors 61 auf die Schwenkachse A des ersten Gelenkarms 40B der zweiten Gelenkarmanordnung 37B. Der Kurbeltrieb 63 weist einen ersten Kurbelarm 42A und einen zweiten Kurbelarm 42B auf, welche jeweils gemeinsam mit dem zugehörigen ersten Gelenkarm 40A, 40B als starre Einheit um die entsprechende Schwenkachse A verschwenkbar sind.

Bei einem Verschwenken des ersten Gelenkarms 40A der ersten Gelenkarmanordnung 37A mittels des Antriebsmotors 61 wie in Fig. 2 dargestellt gegen den Uhrzeigersinn erfolgt somit ein gleichzeitiges Verschwenken des ersten Gelenkarms 40B der zweiten Gelenkarmanordnung 37B im Uhrzeigersinn, sodass also die ersten Gelenkarme 40A, 40B ebenso wie die zweiten Gelenkarme 41A, 41 B der ersten Gelenkarmanordnung 37A und der zweiten Gelenkarmanordnung 37B jeweils gegenläufig zueinander verschwenkt werden und sich folglich die erste Gelenkarmanordnung 37A und die zweite Gelenkarmanordnung 37B insgesamt verkürzen. Im Ergebnis erfolgt eine Höhenverstellung der Tragstruktur 31 relativ zu der Basis 33 in die in Fig. 3 dargestellte Niedrigstellung. Die dritte Gelenkarmanordnung 37C sorgt hierbei dafür, dass kein unerwünschtes Verkippen der Tragstruktur 31 auftritt, sodass während der Höhenverstellung die Produktauflagefläche 25 stets exakt horizontal bleibt. Ebenso könnte eine bestimmte beabsichtigte, von der horizontalen Ausrichtung abweichende Neigung der Produktauflagefläche 25 beibehalten werden. Die Position der Tragstruktur 31 und somit der Produktauflagefläche 25 in Querrichtung, also in einer horizontalen Ebene senkrecht zur Produktförderrichtung P, ändert sich durch die Höhenverstellung nicht, d.h. eine Querverschiebung erfolgt dabei nicht.

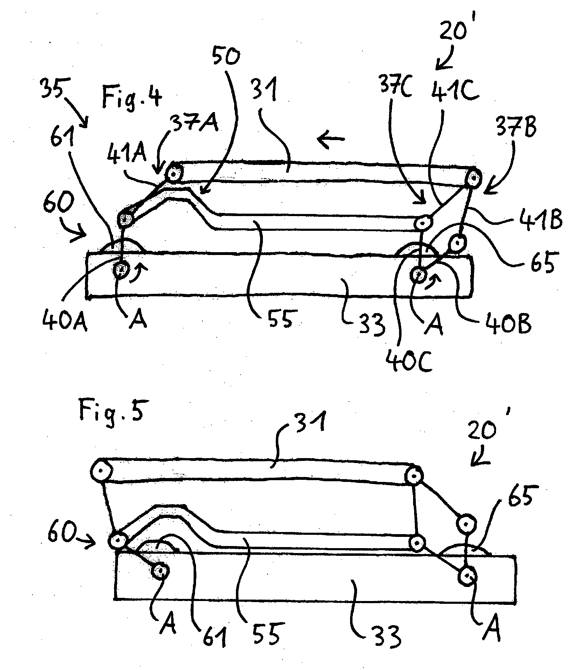

Die Fig. 4 und 5 zeigen eine alternative Ausführungsform einer erfindungsgemäßen Portionierfördereinheit 20', welche im Prinzip ähnlich aufgebaut ist wie die in den Fig. 2 und 3 dargestellte Portionierfördereinheit 20. Die Antriebseinrichtung 60 umfasst hier jedoch zusätzlich zu dem der ersten Gelenkarmanordnung 37A zugeordneten Antriebsmotor 61 einen weiteren Antriebsmotor 65, welcher der zweiten Gelenkarmanordnung 37B zugeordnet ist. Die beiden Antriebsmotoren 61, 65 sind hierbei unabhängig voneinander antreibbar. Da die erste Gelenkarmanordnung 37A und die zweite Gelenkarmanordnung 37B einzeln antreibbar sind, ist kein Kurbeltrieb zur Kopplung der ersten Gelenkarme 40A, 40B vorgesehen. Dies eröffnet die Möglichkeit, durch gleichsinniges synchrones Antreiben der beiden Antriebsmotoren 61, 65 wie in Fig. 4 dargestellt entgegen dem Uhrzeigersinn eine Querverschiebung der Tragstruktur 31 gegenüber der Basis 33 in die in Fig. 5 dargestellte linke Stellung zu bewirken. Die Höhe der Produktauflagefläche 25 bleibt dabei gleich. Davon abgesehen ist es natürlich auch bei der Ausführungsform gemäß Fig. 4 und 5 möglich, die unteren Gelenkarme 40A, 40B gegenläufig und synchron anzutreiben, um so eine Höhenverstellung der Tragstruktur 31 gegenüber der Basis 33 zu bewirken.

Aus den Fig. 2-5 geht hervor, dass die an dem Koppelelement 55 angelenkten ersten Gelenkarme 40A, 40C der ersten und der dritten Gelenkarmanordnung 37A, 37C ebenso wie die an dem Koppelelement 55 angelenkten zweiten Gelenkarme 41A, 41C der ersten und der dritten Gelenkarmanordnung 37A, 37C jeweils gleich lang und zueinander parallel sind, sodass durch die entsprechenden Anlenkpunkte zwei Parallelogramme definiert sind.

Im Ergebnis ermöglicht die Erfindung ein zuverlässiges und exaktes Verstellen einer Portionierfördereinheit 20 je nach Bedarf in vertikaler und/oder horizontaler Richtung, wobei die zugehörige Verstelleinrichtung 35 wesentlich einfacher herzustellen und insbesondere leichter zu reinigen ist als beispielsweise ein Spindeltrieb.

### Bezugszeichenliste

- 11: Hochleistungs-Slicer
- 13: Produktzuführung
- 14: Grundrahmen
- 15: Produkt
- 17: Schneidmesser
- 19: Produktscheibe
- 20, 20': Portionierfördereinheit
- 22: Bandförderer
- 23: Förderband
- 25: Produktauflagefläche
- 27: Produktportion
- 29: Ausgangsförderer
- 31: Tragstruktur
- 33: Basis
- 35: Verstelleinrichtung
- 37A: erste Gelenkarmanordnung
- 37B: zweite Gelenkarmanordnung
- 37C: dritte Gelenkarmanordnung
- 40A-C: erster Gelenkarm
- 41A-C: zweiter Gelenkarm
- 42A: erster Kurbelarm
- 42B: zweiter Kurbelarm
- 50: Kröpfung
- 55: Koppelelement
- 57: erstes Ende
- 59: zweites Ende
- 60: Antriebseinrichtung
- 61: erster Antriebsmotor
- 63: Kurbeltrieb
- 65: zweiter Antriebsmotor
- S: Schneidebene
- P: Produktförderrichtung
- A: Schwenkachse

## Patentansprüche

1. Vorrichtung (20, 20') zum Fördern von Lebensmittelprodukten (19, 27), insbesondere Portionierfördereinheit, mit
wenigstens einer Fördereinrichtung (22), welche dazu ausgebildet ist, auf einer Produktauflagefläche (25) befindliche Lebensmittelprodukte (19, 27) entlang einer Produktförderrichtung (P) zu fördern, wobei die Fördereinrichtung (22) gegenüber einer stationären Basis (33) der Vorrichtung verstellbar ist, und
wobei zur Verstellung der Fördereinrichtung (22) eine Verstelleinrichtung (35) vorgesehen ist, die wenigstens eine erste Gelenkarmanordnung (37A) und eine davon beabstandete zweite Gelenkarmanordnung (37B) umfasst,
**dadurch gekennzeichnet, dass** die erste und die zweite Gelenkarmanordnung (37A, 37B) jeweils wenigstens einen an der Basis (33) angelenkten ersten Gelenkarm (40A, 40B) und einen an der Fördereinrichtung (22) angelenkten zweiten Gelenkarm (41A, 41B) umfassen, wobei einander entsprechende Gelenkarme (40A, 40B, 41A, 41B) der ersten und der zweiten Gelenkarmanordnung (37A, 37B) in gegenläufiger Weise und/oder in gleichsinniger Weise um jeweilige parallele Schwenkachsen (A) verschwenkbar sind,
wobei eine dritte Gelenkarmanordnung (37C) vorgesehen ist, welche wenigstens einen an der Basis (33) angelenkten ersten Gelenkarm (40C) und einen an der Fördereinrichtung (22) angelenkten zweiten Gelenkarm (41C) umfasst, und wobei der erste und/oder der zweite Gelenkarm (40A, 41A) der ersten Gelenkarmanordnung (37A), der erste Gelenkarm (40C) der dritten Gelenkarmanordnung (37C) und der zweite Gelenkarm (41 C) der dritten Gelenkarmanordnung (37C) an einem gemeinsamen starren Koppelelement (55) angelenkt sind.

2. Vorrichtung nach Anspruch 1,
**dadurch gekennzeichnet, dass**
die erste und die zweite Gelenkarmanordnung (37A, 37B) quer zu der Produktförderrichtung (P) voneinander beabstandet sind und vorzugsweise an seitlichen Endbereichen der Fördereinrichtung (22) angeordnet sind.

3. Vorrichtung nach Anspruch 1 oder 2,
**dadurch gekennzeichnet, dass**
die Schwenkachsen (A) parallel zu der Produktförderrichtung (P) verlaufen.

4. Vorrichtung nach einem der vorstehenden Ansprüche,
**dadurch gekennzeichnet, dass**
der erste und der zweite Gelenkarm (40C, 41C) der dritten Gelenkarmanordnung (37C) gleichläufig und synchron zu entsprechenden Gelenkarmen (40A, 41A) der ersten Gelenkarmanordnung (37A) verschwenkbar sind.

5. Vorrichtung nach einem der vorstehenden Ansprüche,
**dadurch gekennzeichnet, dass**
die dritte Gelenkarmanordnung (37C) zwischen der ersten Gelenkarmanordnung (37A) und der zweiten Gelenkarmanordnung (37B) angeordnet ist.

6. Vorrichtung nach einem der vorstehenden Ansprüche,
**dadurch gekennzeichnet, dass**
die an dem Koppelelement (55) angelenkten ersten Gelenkarme (40A, 40C) der ersten und der dritten Gelenkarmanordnung (37A, 37C) und/oder die an dem Koppelelement (55) angelenkten zweiten Gelenkarme (41A, 41C) der ersten und der dritten Gelenkarmanordnung (37A, 37C) jeweils gleich lang und zueinander parallel sind.

7. Vorrichtung nach einem der vorstehenden Ansprüche,
**dadurch gekennzeichnet, dass**
der erste und der zweite Gelenkarm (40C, 41C) der dritten Gelenkarmanordnung (37C) an voneinander beabstandeten Anlenkpunkten an dem Koppelelement (55) angelenkt sind.

8. Vorrichtung nach einem der vorstehenden Ansprüche,
**dadurch gekennzeichnet, dass**
jeder Gelenkarm (40A, 40B, 41A, 41B) der ersten Gelenkarmanordnung (37A) und/oder der zweiten Gelenkarmanordnung (37B) durch ein Paar von gleich langen Parallelhebeln gebildet ist, die jeweils längs der Schwenkachse (A) versetzt angeordnet sind.

9. Vorrichtung nach einem der vorstehenden Ansprüche,
**dadurch gekennzeichnet, dass**
eine Antriebseinrichtung (60) zum gemeinsamen Verschwenken einander entsprechender Gelenkarme (40A, 40B, 41A, 41B) der ersten Gelenkarmanordnung (37A) und der zweiten Gelenkarmanordnung (37B) vorgesehen ist.

10. Vorrichtung nach Anspruch 9,
**dadurch gekennzeichnet, dass**
die Antriebseinrichtung (60) einen der ersten Gelenkarmanordnung (37A) zugeordneten ersten Antrieb (61) aufweist, wobei eine Koppelanordnung (63), insbesondere ein Kurbeltrieb, zur Übertragung einer Antriebskraft von dem ersten Antrieb (61) auf die zweite Gelenkarmanordnung (37B) vorgesehen ist, insbesondere derart, dass einander entsprechende Gelenkarme (40A, 40B, 41A, 41B) der ersten und der zweiten Gelenkarmanordnung (37A, 37B) zur Höhenverstellung der Fördereinrichtung (22) gegenläufig verschwenkbar sind.

11. Vorrichtung nach Anspruch 9 oder 10,
**dadurch gekennzeichnet, dass**
die Antriebseinrichtung (60) einen der ersten Gelenkarmanordnung (37A) zugeordneten ersten Antrieb (61) und einen der zweiten Gelenkarmanordnung (37B) zugeordneten zweiten Antrieb (65) aufweist, wobei der erste Antrieb (61) und der zweite Antrieb (65) unabhängig voneinander betreibbar sind, insbesondere derart, dass die Fördereinrichtung (22) quer zur Produktförderrichtung (P) verstellbar ist.

12. Vorrichtung nach einem der vorstehenden Ansprüche,
**dadurch gekennzeichnet, dass**
die Fördereinrichtung (22) als Band- oder Riemenförderer ausgebildet ist.

13. Produktionslinie, die umfasst:
wenigstens eine Schneidvorrichtung (11) zum Aufschneiden von Lebensmittelprodukten (15), insbesondere Hochleistungs-Slicer, und wenigstens eine Vorrichtung (20, 20') zum Fördern aufgeschnittener Lebensmittelprodukte (19, 27), welche gemäß einem der vorstehenden Ansprüche gestaltet ist.

## Claims

1. An apparatus (20, 20') for conveying food products (19, 27), in particular a portioning conveying unit, comprising at least one conveying device (22) which is configured to convey food products (19, 27) located on a product support surface (25) along a product conveying direction (P),
wherein the conveying device (22) is adjustable with respect to a stationary base (33) of the apparatus,
wherein an adjustment device (35) is provided for adjusting the conveying device (22), said adjustment device comprising at least one first articulated arm arrangement (37A) and one second articulated arm arrangement (37B) spaced apart therefrom, **characterized in that**
the first and the second articulated arm arrangements (37A, 37B) each comprise at least one first articulated arm (40A, 40B) pivotally connected to the base (33) and one second articulated arm (41A, 41B) pivotally connected to the conveying device (22), wherein mutually corresponding articulated arms (40A, 40B, 41A, 41B) of the first and the second articulated arm arrangements (37A, 37B) are pivotable in an opposing sense and/or in the same sense about respective parallel pivot axes (A);
wherein a third articulated arm arrangement (37C) is provided which comprises at least one first articulated arm (40C) pivotally connected to the base (33) and one second articulated arm (41C) pivotally connected to the conveying device (22), and wherein the first and/or the second articulated arms (40A, 41A) of the first articulated arm arrangement (37A), the first articulated arm (40C) of the third articulated arm arrangement (37C) and the second articulated arm (41C) of the third articulated arm arrangement are pivotally connected to a common rigid coupling element (55).

2. An apparatus in accordance with claim 1,
**characterized in that**
the first and the second articulated arm arrangements (37A, 37B) are spaced apart from one another transversely to the product conveying direction (P) and are preferably arranged at lateral end regions of the conveying device (22).

3. An apparatus in accordance with claim 1 or claim 2,
**characterized in that**
the pivot axes (A) extend in parallel to the product conveying direction (P).

4. An apparatus in accordance with any one of the preceding claims,
**characterized in that**
the first and the second articulated arms (40C, 41C) of the third articulated arm arrangement (37C) are pivotable in the same direction and synchronously with corresponding articulated arms (40A, 41A) of the first articulated arm arrangement (37A).

5. An apparatus in accordance with any one of the preceding claims,
**characterized in that**
the third articulated arm arrangement (37C) is arranged between the first articulated arm arrangement (37A) and the second articulated arm arrangement (37B).

6. An apparatus in accordance with any one of the preceding claims,
**characterized in that**
the first articulated arms (40A, 40C) of the first and the third articulated arm arrangements (37A, 37C) pivotally connected to the coupling element (55) and/or the second articulated arms (41A, 41C) of the first and the third articulated arm arrangements (37A, 37C) pivotally connected to the coupling element (55) are each of the same length and are in parallel to one another.

7. An apparatus in accordance with any one of the preceding claims,
**characterized in that**
the first and the second articulated arms (40C, 41C) of the third articulated arm arrangement (37C) are pivotally connected to the coupling element (55) at mutually spaced apart pivotal connection points.

8. An apparatus in accordance with any one of the preceding claims,
**characterized in that**
each articulated arm (40A, 40B, 41A, 41B) of the first articulated arm arrangement (37A) and/or of the second articulated arm arrangement (37B) is formed by a pair of parallel levers of equal length which are each arranged offset along the pivot axis (A).

9. An apparatus in accordance with any one of the preceding claims,
**characterized in that**
a drive device (60) is provided for the common pivoting of mutually corresponding articulated arms (40A, 40B, 41A, 41B) of the first articulated arm arrangement (37A) and of the second articulated arm arrangement (37B).

10. An apparatus in accordance with claim 9,
**characterized in that**
the drive device (60) has a first drive (61) associated with the first articulated arm arrangement (37A), with a coupling arrangement (63), in particular a crank drive, being provided for transferring a driving force from the first drive (61) to the second articulated arm arrangement (37B), in particular in such a way that mutually corresponding articulated arms (40A, 40B, 41A, 41B) of the first and the second articulated arm arrangements (37A 37B) are pivotable in opposite directions for a vertical adjustment of the conveying device (22).

11. An apparatus in accordance with claim 9 or claim 10,
**characterized in that**
the drive device (60) has a first drive (61) associated with the first articulated arm arrangement (37A) and a second drive (65) associated with the second articulated arm arrangement (37B), with the first drive (61) and the second drive (65) being operable independently of one another, in particular such that the conveying device (22) is adjustable transversely to the product conveying device (P).

12. An apparatus in accordance with any one of the preceding claims,
**characterized in that**
the conveying device (22) is configured as a belt conveyor or as a strip conveyor.

13. A production line comprising:
at least one cutting apparatus (11) for slicing food products (15), in particular a high performance slicer, and at least one apparatus (20, 20') for conveying sliced food products (19, 27) which is designed in accordance with any one of the preceding claims.

## Revendications

1. Dispositif (20, 20') pour convoyer des produits alimentaires (19, 27), en particulier unité de convoyage et de portionnement, comprenant au moins un dispositif de convoyage (22) qui est réalisé pour convoyer des produits alimentaires (19, 27), qui se trouvent sur une surface de dépose de produits (25), le long d'une direction de convoyage de produits (P),
dans lequel le dispositif de convoyage (22) est susceptible d'être déplacé par rapport à une base stationnaire (33) du dispositif, et
dans lequel il est prévu, pour déplacer le dispositif de convoyage (22), un dispositif de déplacement (35) qui inclut au moins un premier agencement à bras articulés (37A) et un second agencement à bras articulés (37B) écarté de celui-ci,
**caractérisé en ce que**
le premier et le second agencement à bras articulés (37A, 37B) incluent respectivement au moins un premier bras articulé (40A, 40B) articulé sur la base (33), et un second bras articulé (41A, 41B) articulé sur le dispositif de convoyage (22), dans lequel des bras articulés correspondants (40A, 40B, 41A, 41B) du premier et du second agencement à bras articulés (37A, 37B) sont capables de pivoter autour d'axes de pivotement respectifs parallèles (A) dans des sens opposés et/ou dans le même sens,
dans lequel il est prévu un troisième agencement à bras articulés (37C), qui inclut au moins un premier bras articulé (40C) articulé sur la base (33) et un second bras articulé (41C) articulé sur le dispositif de convoyage (22), et dans lequel le premier et/ou le second bras articulé (40A, 41A) du premier agencement à bras articulés (37A), le premier bras articulé (40C) du troisième agencement à bras articulés (37C), et le second bras articulé (41C) du troisième agencement à bras articulés (37C) sont articulés sur un élément d'accouplement rigide commun (55).

2. Dispositif selon la revendication 1,
**caractérisé en ce que** le premier et le second agencement à bras articulés (37A, 37B) sont écartés l'un de l'autre transversalement à la direction de convoyage (P) des produits et sont de préférence agencés à des zones terminales latérales du dispositif de convoyage (22).

3. Dispositif selon la revendication 1 ou 2,
**caractérisé en ce que** les axes de pivotement (A) s'étendent parallèlement à la direction de convoyage (P) des produits.

4. Dispositif selon l'une des revendications précédentes,
**caractérisé en ce que** le premier et le second bras articulé (40C, 41C) du troisième agencement à bras articulés (37C) sont capables de pivoter dans le même sens et de manière synchrone à des bras articulés correspondants (40A, 41 A) du premier agencement à bras articulés (37A).

5. Dispositif selon l'une des revendications précédentes,
**caractérisé en ce que** le troisième agencement à bras articulés (37C) est agencé entre le premier agencement à bras articulés (37A) et le second agencement à bras articulés (37B).

6. Dispositif selon l'une des revendications précédentes,
**caractérisé en ce que** les premiers bras articulés (40A, 40C), articulés à l'élément d'accouplement (55), du premier et du troisième agencement à bras articulés (37A, 37C) et/ou les seconds bras articulés (41A, 41C), articulés à l'élément d'accouplement (55), du premier et du troisième agencement à bras articulés (37A, 37C) ont respectivement la même longueur et sont parallèles l'un à l'autre.

7. Dispositif selon l'une des revendications précédentes,
**caractérisé en ce que** le premier et le second bras articulé (40C, 41C) du troisième agencement à bras articulés (37C) sont articulés à l'élément d'accouplement (55) à des points d'articulation écartés l'un de l'autre.

8. Dispositif selon l'une des revendications précédentes,
**caractérisé en ce que** chaque bras articulé (40A, 40B, 41A, 41B) du premier agencement à bras articulés (37A) et/ou du second agencement à bras articulés (37B) est formé par une paire de leviers parallèles de même longueur, qui sont respectivement agencés en décalage le long de l'axe de pivotement (A).

9. Dispositif selon l'une des revendications précédentes,
**caractérisé en ce qu'**il est prévu un système d'entraînement (60) pour faire pivoter conjointement des bras articulés (40A, 40B, 41A, 41B) mutuellement correspondants du premier agencement à bras articulés (37A) et du second agencement à bras articulés (37B).

10. Dispositif selon la revendication 9,
**caractérisé en ce que**
le système d'entraînement (60) comprend un premier entraînement (61) associé au premier agencement à bras articulés (37A), dans lequel il est prévu un agencement de couplage (63), en particulier un entraînement à manivelle, pour transmettre une force d'entraînement depuis le premier entraînement (61) vers le second agencement à bras articulés (37B), en particulier de telle manière que des bras articulés (40A, 40B, 41A, 41B) mutuellement correspondants du premier et du second agencement à bras articulés (37A, 37B) sont capables de pivoter en sens opposés pour le déplacement en hauteur du système de convoyage (22).

11. Dispositif selon la revendication 9 ou 10,
**caractérisé en ce que** le système d'entraînement (60) comprend un premier entraînement (61) associé au premier agencement à bras articulés (37A), et un second entraînement (65) associé au second agencement à bras articulés (37B), dans lequel le premier entraînement (61) et le second entraînement (65) sont capables de fonctionner indépendamment l'un de l'autre, en particulier de telle manière que le dispositif de convoyage (22) est déplaçable transversalement à la direction de convoyage (P) des produits.

12. Dispositif selon l'une des revendications précédentes,
**caractérisé en ce que** le système de convoyage (22) est réalisé sous forme de convoyeur à bande ou de convoyeur à courroie.

13. Ligne de production qui inclut :
au moins un dispositif de coupe (11) pour découper des produits alimentaires (15), en particulier trancheuse à haute performance, et au moins un dispositif (20, 20') pour convoyer des produits alimentaires découpés (19, 27), qui est conçu selon l'une des revendications précédentes.
